Europäisches Patentamt

European Patent Office

Office européen des brevets

(11) Veröffentlichungsnummer: **0 308 523 B1**

(12) **EUROPÄISCHE PATENTSCHRIFT**

(45) Veröffentlichungstag der Patentschrift: 26.06.91

(51) Int. Cl.5: **B01J 49/00, C02F 1/42,**
**G01N 27/04, G01N 27/10**

(21) Anmeldenummer: 87113804.6

(22) Anmeldetag: 22.09.87

(54) **Verfahren zum Messen des Beladungsgrades eines Ionenaustauschfilters.**

(43) Veröffentlichungstag der Anmeldung:
29.03.89 Patentblatt 89/13

(45) Bekanntmachung des Hinweises auf die
Patenterteilung:
26.06.91 Patentblatt 91/26

(84) Benannte Vertragsstaaten:
AT BE CH DE ES FR GB GR IT LI LU NL SE

(56) Entgegenhaltungen:
DE-A- 2 234 456          DE-A- 3 629 712
DE-C- 1 498 526          FR-A- 1 270 383
GB-A- 1 054 626          GB-A- 2 112 145
US-A- 4 320 010

(73) Patentinhaber: **Kunz, Gerhard, Dipl.-Chem. Dr.**
**Ing.**
**Ruhrstrasse 111**
**W-5628 Heiligenhaus(DE)**

Patentinhaber: **Goebel, Johannes**
**Rupt-sur-Moselle-Strasse 32**
**W-6501 Stadecken-Elsheim 1(DE)**

(72) Erfinder: **Kunz, Gerhard, Dipl.-Chem. Dr. Ing.**
**Ruhrstrasse 111**
**W-5628 Heiligenhaus(DE)**
Erfinder: **Goebel, Johannes**
**Rupt-sur-Moselle-Strasse 32**
**W-6501 Stadecken-Elsheim 1(DE)**

(74) Vertreter: **Merten, Fritz**
**Tristanstrasse 5**
**W-8500 Nürnberg 40(DE)**

Rank Xerox (UK) Business Services

## Beschreibung

Die Erfindung betrifft eine Verfahren zur Messung des Beladungsgrades eines Ionenaustauschfilters gemäß dem Oberbegriff des Patentanspruchs 1.

Wird ein solches Ionenaustauschfilter, beispielsweise ein Enthärtungsfilter, nach seiner Regeneration mit Rohwässer beaufschlagt, so werden die in der Austauschermasse gespeicherten Ionen, in diesem Beispiel also Natriumionen, gegen die im Rohwasser enthaltenen Calciumionen ausgetauscht. Die Ionenkonzentrationen des Natriums und des Calciums verändern sich in der Austauschermasse und in der sie umgebenden wäßrigen Lösung, wobei diese Veränderung solange vor sich geht, bis ein dem System entsprechendes Gleichgewicht der Ionenkonzentrationen zwischen der Austauscherphase und der flüssigen Phase erreicht ist. In der Austauscherphase bildet sich also ein Konzentrationsprofil des Calciums aus, das in Strömungsrichtung durch die Austauschermasse wandert und eine Calciumkonzentration in der Austauschermasse hinterläßt, die sich im Konzentrationsgleichgewicht mit der zu behandelnden wäßrigen Lösung, in diesem Beispiel also Rohwasser, befindet. In der wäßrigen Lösung stellt sich ebenfalls ein Konzentrationsprofil des Calciums ein, das vom Konzentrationsprofil der Austauscherphase bestimmt wird.

Die Enthärtung des Rohwassers ist also dann nicht mehr vollständig, wenn das Konzentrationsprofil des Calciums in der Austauscherphase bei seiner Wanderung durch die Filterschicht die in der Regel unterste, also sich am Ablauf befindende und somit zuletzt durchströmte Austauschermasse erreicht hat.

Es ist aus der DE-PS 31 26 580 bekannt, diesen Endpunkt der Beladung dadurch zu ermitteln, daß in zwei oder mehreren Ebenen vertikal zur Strömungsrichtung die elektrischen Widerstände im Filterinhalt, der aus wäßriger Lösung und Austauschermasse besteht, gemessen werden und Differenzen der Widerstände zur Positionserkennung der Beladungsfront gebildet werden.

Es ist ferner bekannt, diese Widerstandsdifferenzen des Filterinhalts, d. h. des Filtergemisches, aus zwei oder mehreren Ebenen, direkt oder indirekt, als Signal für optische und/oder akustische Anzeigen und/oder zur Auslösung von Schaltvorgängen zu verwenden, wie z. B. die Auslösung der Schaltvorgänge für den Regenerationsablauf. Bei einer in der DE-PS 31 26 580 beschriebenen Ausführungsform ist deren mittels dem Referenzelektrodenpaar gemessene Referenzwiderstand und der mittels dem Meßelektrodenpaar gemessene Meßwiderstand mit zwei weiteren Widerständen zu einer Brückenschaltung zusammengeschaltet. Nach durchgeführter Regeneration sind Referenzwiderstand und Meßwiderstand gleich groß und die Brückenschaltung abgeglichen.

Wandert das Konzentrationsprofil des Calciums in Strömungsrichtung durch die Ionenaustauschermasse und erreicht das Meßelektrodenpaar, so steigt der Meßwiderstand an und die Brückenschaltung wird verstimmt. Der Brückenschaltung ist ein Komparator nachgeschaltet, dessen erstem Eingang die am Meßwiderstand abfallende Wechselspannung und dessen zweitem Eingang die am Referenzwiderstand abfallende, geregelte Spannung (Referenzspannung) zugeführt werden. Überschreitet die Differenzspannung zwischen Meßspannung und Referenzspannung einen vorgebbaren Wert, so wird ein Relais eingeschaltet und ein Zeitsteuermotor gestartet. Die Widerstandsdifferenz wird direkt oder indirekt, als Signal für optische und/oder akustische Anzeigen und/oder zur Auslösung von Schaltvorgängen verwendet, wie z. B. die Auslösung der Schaltvorgänge für den Regenerationsablauf.

Bei der praktischen Anwendung dieser Methode hat sich jedoch gezeigt, daß sie mit schwerwiegenden Nachteilen behaftet ist. In praktischen Versuchsreihen hat sich ergeben, daß die im Filtergemisch, beispielsweise in zwei Ebenen ermittelten und der Differenzbildung zugrunde liegenden Widerstände sehr unterschiedlich sein können, und zwar selbst dann, wenn das Filtergemisch in den besagten Ebenen chemisch gleichmäßig behandelt wurde, also gleichmäßig regeneriert wurde. Diese Abweichungen im Widerstandsverhalten sind deshalb gravierend, weil sie die Differenzbildung so stark beeinflussen können, daß eine sichere Erkennung des Beladungszustandes nicht mehr möglich ist bzw. Fehlschaltungen ausgelöst werden.

Eine ganz besondere Unsicherheit dieser Methode liegt darin begründet, daß die Widerstandsabweichungen in den Meßebenen zufallsbestimmt, gleichläufig oder gegenläufig sein können, und die dadurch entstehenden Fehler bei der Differenzbildung noch vergrößert werden.

Im Falle relativ geringen Regeneriermittelaufwands bei der Regeneration, was heute im Hinblick auf ein umweltfreundliches Verhalten der weit verbreiteten Enthärtungsanlagen unumgänglich ist, wird die für eine betriebssichere Signalbildung notwendige Widerstandsdifferenz nicht mehr erreicht bzw. sie liegt im Fehlerbereich der Widerstandsabweichungen.

Ein weiterer erheblicher Nachteil des aus der DE-PS 31 26 580 bekannten Meßverfahrens liegt darin begründet, daß es zwischen dem regenerierten und beladenen Zustand der Austauscherfilterschicht nicht unterscheiden kann. Aber auch Teilbeladungszustände können nicht erkannte werden, wenn die Filterschicht vermischt wurde, also keine Konzentrationsgradienten in Strömungsrichtung mehr vorliegen. Dies ist beispielsweise nach einer abgelaufenen Regeneration der Fall, bei der die Regeneriermittelzuführung versagt hat. Ein mit einer derartigen Vorrichtung gesteuertes Filter würde nach einer unwirksamen abgelaufenen Regeneration wieder in Betrieb gehen.

Nach längerer Betriebszeit üblicher Filteranlagen kann die Kapazität der Ionenaustauschermassen, z. B. durch irreversible Aufnahme von Eisen und/oder Mangan, geringer werden. Es ist nun ein besonderer Nachteil des bekannten Verfahrens, daß beim Unterschreiten einer gewissen Kapazität der Ionenaustauschermassen eine Regeneration nicht mehr ausgelöst wird und die nach diesem Verfahren gesteuerte Filteranlage nicht enthärtetes Rohwasser als Produkt liefert. Solchen Filteranlagen nachgeschaltete Weichwasserverbraucher sind durch dieses Verhalten des bekannten Meßverfahrens der Zerstörungsgefahr ausgesetzt.

Hier setzt die Erfindung ein, der die Aufgabe zugrunde liegt, den Beladungsgrad von Ionenaustauschermassen zu ermitteln, diese Ermittlung sowohl in geschichteten als auch ungeschichteten Austauschermassen durchzuführen, ferner den Wirkungsgrad einer Regeneration zu erkennen, sowie eine Vorrichtung zur Durchführung des Meßverfahrens so auszuführen, daß sie einfach herzustellen, leicht in Filteranlagen einzubauen und weitgehend störunanfällig ist, und daß sie eine Filteranlage betriebssicher steuern und die Abgabe von nicht behandeltem Rohwasser verhindern kann.

Diese Aufgabe wird erfindungsgemäß durch ein Verfahren mit den Merkmalen des Patentanspruchs 1 gelöst.

Durch die Maßnahmen einer relativierten Messung der Ionenbeweglichkeit, wobei die Relativierung zu einer Sättigungskonzentration, vorzugsweise zu der Sättigungskonzentration des beladenen Ionenaustauscherzustandes, erfolgt, und durch die Verwendung daraus gebildeter Signale für die Steuerung von Filteranlagen, insbesondere Enthärtungsfiltern, wird die der Erfindung zugrunde liegende Aufgabe nicht nur vorteilhaft gelöst, sondern es werden auch eine Reihe betriebstechnischer Vorteile erreicht, speziell im Hinblick auf größere Betriebssicherheit und im Hinblick auf einen geringeren Regeneriermittelverbrauch, also einer geringen Umweltbelastung. Diese Vorteile sind im einzelnen :

a) Die Messung der elektrischen Leitfähigkeit bzw. des elektrischen Widerstands in nur einer Ebene senkrecht zur Strömungsrichtung und die Ermittlung des Beladungsgrades durch Relativierung zum Beladungszustand verringert den Fehlereinfluß infolge unterschiedlicher Schichtung des Filterinhaltes bei den sich wiederholenden Beladungszyklen ganz erheblich. Insbesonder ist eine Fehleraddition bei unterschiedlichem Schichtverhalten ausgeschlossen. Dadurch steht ein wesentlich ausgeprägteres Signal zur Steuerung der Filter zur Verfügung, das nicht mehr störanfällig ist.

b) Infolge dieses viel stärker ausgeprägten Signals ist der Einsatz selbst geringer Regeneriermittelmengen möglich. Damit wird der Salzausstoß in Form von Abwasser bei jeder Regeneration deutlich geringer und somit auch die Umweltbelastung, insbesondere was die Ableitung der aus dem Regeneriermittel stammenden Chloride anbetrifft, reduziert.

c) Ein weiterer Vorteil des erfindungsgemäßen Meßverfahrens ist, daß es den Regeneriergrad der Austauschermasse im Verhältnis zur beladenen Austauschermasse erkennen kann. Das heißt, daß mit Hilfe dieses Meßverfahrens erkannt werden kann, ob eine abgelaufene Regeneration ausreichend, unvollständig oder überhaupt nicht gewirkt hat; das nach einer unvollständig oder gar nicht abgelaufenen Regeneration zur Verfügung stehende Signal ist geeignet, eine erneute Regeneration auszulösen bzw. das Filter abzuschalten.

Dies bedeutet eine große Sicherheit gegen das "Überfahren" der Filter und stellt einen sicheren Schutz aller einem solchen Filter nachgeschalteten Anlagen dar.

d) Wenn sich, wie meßtechnische Untersuchungen aufgezeigt haben, nach längerer Betriebszeit die Kapazität der Ionenaustauschermasse verschlechtert, weil diese beispielsweise irreversibles Eisen und/oder Mangen aufgenommen hat, so kann dies mittels des erfindungsgemäßen Verfahrens erkannt werden. Wenn zu einem, nicht vorbestimmbaren Zeitpunkt aus diesem Grunde die Regeneration nicht mehr ausreicht, so ist das dann zur Verfügung stehende Signal ebenfalls geeignet, eine Abschaltung des Ionenaustauschfilters vorzunehmen und dadurch z. B. einen Härtedurchbruch in den an das Ionenaustauschfilter angeschlossenen Weichwasserverbraucher zu verhindern.

Die Schaltungsanordnung zur Durchführung des erfindungsgemäßen Verfahrens erfordert einen geringen Schaltungsaufwand, ist mittels handelsüblicher Bauelemente einfach herzustellen, zur Nachrüstung bestehender Filteranlagen geeignet und weitgehend störunanfällig.

Vorteilhafte Ausführungsformen der Erfindung sind in weiteren Patentansprüchen angegeben.

Das erfindungsgemäße Verfahren wird im folgenden anhand einer in der Zeichnung dargestellten Ausführungsform näher beschrieben und erläutert. Es zeigen:

Fig. 1    eine Filteranlage mit Meßglied und Meß- und Steuerelektronik in Schnittdarstellung,

Fig. 2    das Meßglied in vergrößerter Darstellung und

Fig. 3    als Blockschaltbild eine Ausführungsform für eine Schaltungsanordnung zur Durchführung des erfindungsgemäßen Verfahrens.

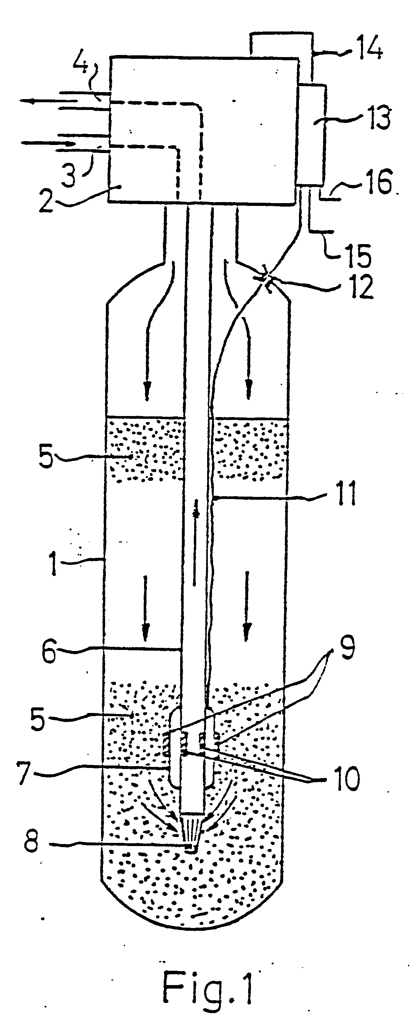

Fig. 1 zeigt eine Filteranlage, wie diese beispielsweise für die Enthärtung von Rohwässern (Oberflächenwässer, Grundwässer) verwendet wird. Diese besteht im wesentlichen aus einem zylinderförmigen Filterbehälter 1, einem Steuerventil 2 mit Zu- und Ableitungen 3 und 4, einer Ionenaustauschermasse 5 und einem zentralen Steigrohr 6. Das zentrale Steigrohr 6 mündet mit seinem oberen Ende im Steuerventil 2 und mit seinem unteren Ende in eine obere Muffe eines Meßgliedes 7. Das Meßglied 7 ist als Doppelmuffe ausgebildet, wobei in der unteren Muffe eine Filterdüse 8 eingepaßt ist. Das Meßglied 7 weist an seinem äußeren Umfang ein erstes Elektrodenpaar 9 und an seinem inneren Umfang ein zweites Elektrodenpaar 10 auf.

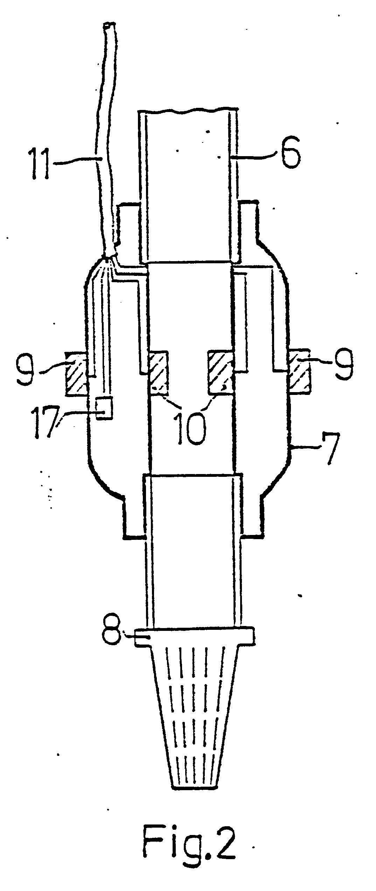

Das Meßglied 7 ist über ein Kabel 11, welches durch eine Kabeldurchführung 12 auf dem Filterbehälter 1 herausgeführt ist, mit einer Meß- und Steuerelektronik 13 verbunden. Diese Meß- und Steuerelektronik ist mittels elektrischer Leitungen 14 mit einer in der Zeichnung nicht dargestellten Antriebseinrichtung für das Steuerventil 2 verbunden und weist ferner eine Leitung 15 zur Stromversorgung sowie eine Leitung 16 zur Fernübertragung von Steuersignalen auf. Bei der in Fig. 2 gezeigten Ausführungsform für das Meßglied 7 ist im Bereich zwischen dem ersten Elektrodenpaar 9 und dem zweiten Elektrodenpaar 10 ein Temperaturfühler 17 angeordnet, welcher mittels dem Kabel 11 an die Meß- und Steuerelektronik 13 angeschlossen ist.

Am unteren Ende des Meßgliedes 7 ist ein Filterelement beispielsweise die Filterdüse 8 angebracht und dieses Meßglied geht am oberen Ende in das zentrale Steigrohr 6 über.

Bei der in Fig. 1 gezeigten Ausführungsform wird die Filteranlage mit Rohwasser beaufschlagt, indem durch die Leitung 3 und das Steuerventil 2 das Rohwasser in die Ionenaustauschermasse 5 des Filterbehälters 1 eingeleitet wird. Die Ionenaustauschermasse 5, welche sich im regenerierten Zustand befindet, umgibt zusammen mit dem Kornzwischenraumwasser das erste Elektrodenpaar 9. Das in die Ionenaustauschermasse 5 (Filterschicht) eingeleitete Rohwasser wird bereits in der obersten Ionenaustauscherfilterschicht enthärtet, wobei diese Ionenaustauscher-Filterschichten die Calcium-Ionen (und auch die Magnesium-Ionen) aufnehmen und dafür Natrium-Ionen an das Wasser abgeben.

Das enthärtete Wasser strömt im Kornzwischenraum der Ionenaustauschermasse 5 am ersten Elektrodenpaar 9 vorbei, und verläßt die Ionenaustauschermasse 5 durch die Filterdüse 8. Am zweiten Elektrodenpaar 10 strömt das Nutzwasser vorbei und verläßt den Filterbehälter 1 durch das Steigrohr 6 und gelangt durch das Steuerventil 2 in die Ablaufleitung 4 der Filteranlage. Die Meß- und Steuerelektronik 13 registriert dabei mit Hilfe der Elektrodenpaare 9, 10 und dem Temperaturfühler 17 den temperaturkompensierten Beladungsgrad der Ionenaustauschermasse 5 im Bereich des Meßgliedes 7.

Mit fortschreitender Beladung der Ionenaustauschermasse 5 wandert das Konzentrationsprofil des Calciums in der Ionenaustauschermasse nach unten auf das Meßglied 7 zu. Wenn die Calcium-Konzentration in der Ionenaustauschermasse 5 den Bereich des ersten Elektrodenpaares 9 erreicht hat, registriert die Meß- und Steuerelektronik 13 die mehr oder weniger schnelle Beladung in diesem Bereich.

Wird dabei ein vorgegebener Grenzwert überschritten, so wird über die Kabelverbindung 14 das Antriebssystem des Steuerventile 2 aktiviert und der Ablauf der im Steuerventil üblicherweise programmierten Regenerationsschritte in Gang gesetzt. Gleichzeitig steht über die Kabelleitung 16 ein Signal an, mit dem nachgeschaltete Weichwasserverbraucher für die Zeit der Regeneration der Filteranlage abgestellt oder umgeschaltet werden können. Es ist offensichtlich, daß bei geeigneter Verschaltung von zwei Filtern ein wechselseitiger Betrieb gesteuert werden kann, bei dem jeweils eine Filteranlage die Produktion von Weichwasser übernimmt, während die andere regeneriert wird, und umgekehrt.

Im Augenblick der besagten Grenzwertüberschreitung und Auslösung des Regenerationsvorganges ist die Austauschermasse im Bereich unterhalb des ersten Elektrodenpaares 9 bis hin zur Filterdüse 8 noch nicht mit Calcium-Ionen beladen, sie befindet sich also im regenerierten Zustand. Das kurz vor der Umschaltung aus der Filterschicht durch die Filterdüse 8, das Steigrohr 6 und die Ablaufleitung 4 abfließende Wasser ist also noch Weichwasser mit der gewünschten Produktqualität.

Wenn die Regeneration ausgelöst ist, läuft sie, wie bekannt, nach dem im Steuerventil 2 vorgegebenen Verfahrensschritten ab. In dieser Zeit der Regeneration ist die Abgabe von Steuerimpulsen von der Meß- und Steuerelektronik 13 an das Antriebssystem des Steuerventils 2 blockiert. Nach Ablauf der Regeneration wird diese Blockierung aufgehoben. Im Falle einer ausreichenden Regeneration registriert die Meß- und Steuerelektronik 13 mit Hilfe des Meßgliedes 7 den regenerierten Zustand der Austauschermasse 5 und die Filteranlage ist produktionsbereit. Im Falle einer nicht ausreichenden Regeneration wird erneut das Antriebssystem des Steuerventils 2 aktiviert und eine erneute Regeneration eingeleitet.

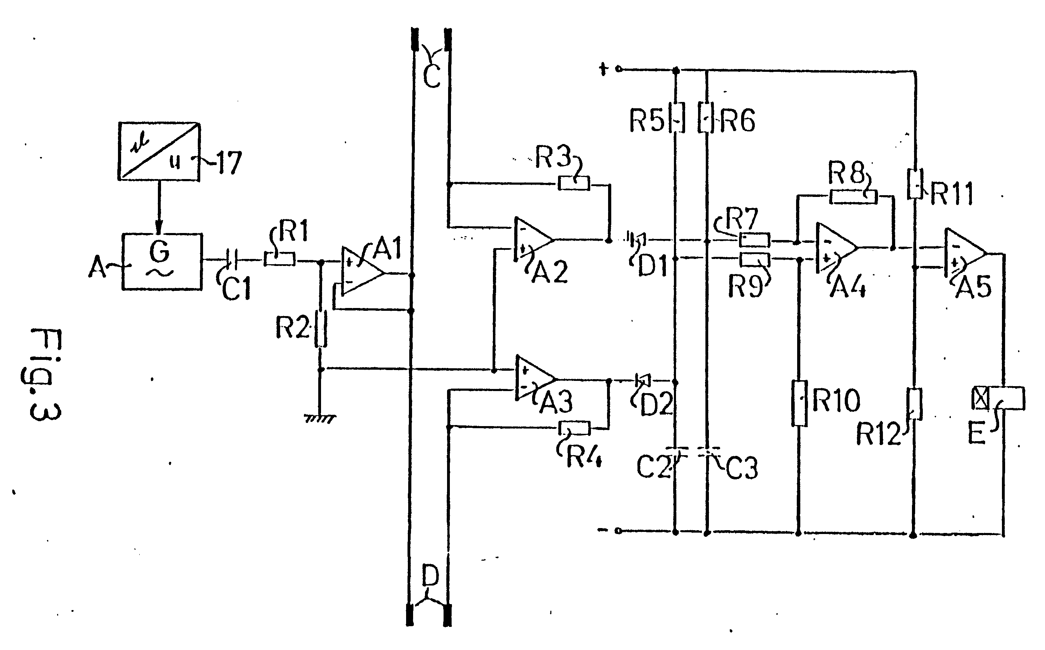

In Fig. 3 ist eine Ausführungsform für eine Schaltungsanordnung zur Durchführung des erfindungsgemäßen Verfahrens in Blockschaltform angegeben. Ein Sinusgenerator A erzeugt eine Wechselspannung und mittels eines Temperaturfühlers17 wird diese Spannung bei steigender Temperatur reduziert. Die Charakteristik des Temperaturfühlers 17 ist so gewählt, daß diese der Temperatur-Leitfähigkeitsfunktion des zu messenden Mediums, beispielsweise üblicher Rohwässer, entspricht.

Mittels eines mit dem Sinusgenerator A verbundenen Kondensators C1 wird die Wechselspannung entkoppelt und mittels nachgeschalteter Widerstände R1, R2 wird eine Symmetrie bezüglich des Massenpotentials erreicht. Hierzu ist der Widerstand R1 mit einem Anschluß des Kondensators C1 und mit dem nicht invertierenden Eingang eines Impetanzwandlers A1 verbunden, während der Widerstand R2 zwischen dem nicht invertierenden Eingang des Impetanzwandlers A1 und Masse angeordnet ist. Der Ausgang des Impetanzwandlers A1 ist jeweils mit einer ersten Elektrode des ersten und zweiten Elektrodenpaares C, D verbunden und leitet eine niederohmige Meßspannung an diese Elektroden.

Die jeweils zweite Elektrode des jeweils ersten und zweiten Elektrodenpaares C, D ist mit den jeweiligen invertierenden Eingängen der Operationsverstärker A2, A3 verbunden, während deren nichtinvertierenden Eingänge an Masse angelegt sind. Die Operationsverstärker A2, A3 die mit den Widerständen R3, R4 Meßverstärker bilden, liefern jeweils eine Wechselspannung, die mit den Diode D1, D2 gleichgerichtet und mit den Siebgliedern R5, C2 und R6, C3 geglättet werden. Die Widerstände R3 und R4 sind so gewählt, daß das Amplitudenverhältnis der Ausgänge von A3, A2 etwa 2:3 beträgt. Die Dioden D1 bzw. D2 sind mit ihren Kathoden mit dem Ausgang der Verstärker A2 bzw. A3 verbunden, während die Anode der Dioden D1 bzw. D2 jewils mit einem Anschluß des Kondensators C3 bzw. C2 verbunden sind. Die zweiten Anschlüsse der beiden Kondensatoren C2 bzw. C3 sind einerseits mit einem ersten Anschluß der beiden Widerstände R5, bzw. R6 verbunden während die zweiten Anschlüsse der beiden Kondensatoren C2, C3 bzw. der Widerstände R5, R6 an jeweils eine Klemme einer Betriebsspannungsquelle angeschlossen sind.

Den Verstärkern A2, A3 ist ein Differenzverstärker A4 nachgeordnet, wobei mit dessen invertierendem Eingang ein erster Anschluß eines Widerstands R7, dessen zweiter Anschluß mit der Diode D1 verbunden ist, und an dessen invertierenden Eingang ein Widerstand R9 angeschlossen ist, dessen zweiter Anschluß an die Kathode der Diode D2 angeschlossen ist. Zwischen dem nicht invertierenden Eingang des Differenzverstärkers und der Klemme mit negativem Potential der Betriebsspannungsquellen ist ein Widerstand R10 angeordnet. Zwischen Ausgang des Differenzverstärkers A4 und invertierenden Eingang ist ein Widerstand R8 angeordnet.

Dem Differenzverstärker A45 ist ein Komparator A5 nachgeschaltet, wobei der Ausgang des Differenzverstärkers A4 mit dem invertierenden Eingang des Komparators A5 verbunden ist. Die Referenzspannung für den Komparator A5 wird mittels eines zwischen den Klemmen der Betriebsspannungsquelle angeordneten Spannungsteilers mit den Widerständen R11, R12 vorgegeben. Die Referenzspannung im beladenen Zustand der Ionenaustauschermasse ist mittels eines Spannungsteilers R11, R12 geringfügig höher eingestellt als die Ausgangsspannung des Differenzverstärkers A4, wodurch ein zwischen Klemme mit negativem Potential der Betriebsspannungsquelle und Ausgang des Komparators A5 liegende Relais E angezogen wird.

Im regenerierten Zustand der Ionenaustauschermasse 5 ist die Ausgangsspannung des Differenzverstärkers A4 höher als die Referenzspannung des Komparators A5, wodurch das Relais E nicht geschaltet wird. Nach einer einmal getätigten Einstellung wiederholen sich diese Schaltvorgänge mit Regeneration und Beladung, wobei durch das Öffnen und Schließen der Kontakte des Relais E die entsprechenden Steuervorgänge eingeleitet werden.

An das Relais E kann auch beispielsweise eine Anzeigeeinrichtung angeschlossen werden, wodurch der Beladungsgrad und der Betriebszustand des Ionenaustauschfilters angezeigt werden kann. Um zu verhindern, daß kurzzeitig auftretende Störungen bereits eine Regeneration einleiten, erfolgt die Regeneration erst bei Überschreiten einer gewissen Verzögerungszeit.

Bei einer in der Zeichnung nicht dargestellten Ausführungsform für die Meß- und Steuerelektronik 13 kann auch eine Einrichtung verwendet werden, welche die mittels der beiden Elektrodenpaare C, D ermittelten Meßwerte digital auswertet.

## Ansprüche

1. Verfahren zum Messen des Beladungsgrades eines Ionenaustauschfilters, wobei die Messung mit Hilfe von Meßwerten aus der elektrischen Leitfähigkeit bzw. des elektrischen Widerstands erfolgt, dadurch gekennzeichnet, daß die elektrische Leitfähigkeit bzw. der elektrische Widerstand als relativer Verhältniswert ermittelt wird, daß dieser Verhältniswert aus der momentanen und der Leitfähigkeit bei Sättigungskonzentration einer Ionenart gebildet wird und daß diese Messungen derart durchgeführt werden, daß zum einen die Messung der elektrischen Leitfähigkeit im Gemisch der Ionenaustauschermasse mit der flüssigen Phase und zum anderen eine Messung der elektrischen Leitfähigkeit allein in der flüssigen Phase erfolgt, wie auch diese Messungen temperaturkompensierend durchgeführt werden, daß aus diesen beiden Messungen die elektrische Leitfähigkeit der Ionenaustauscherphase ermittelt wird und diese Ermittlung bei Sättigung mit der Ionenart niedrigerer elektrischer Leitfähigkeit erfolgt und dieser Wert als Referenzwert gespeichert wird, daß durch ständige Messungen während der Beladungsphase des Filters die momentane elektrische Leitfähigkeit der Ionenaustauschermasse ermittelt wird, wie auch aus diesen momentanen Werten und dem gespeicherten Referenzwert ständig Verhältniswerte gebildet und diese Verhältniswerte als Signale ausgeführt werden, die sowohl als Anzeige des Filterzustands als auch zur Auslösung des Regenerationsvorgangs des Filters verwendet werden.

2. Verfahren nach Anspruch 1, dadurch gekennzeichnet, daß die Sättigungskonzentration der Ionenaustauschermasse, die die geringere Leitfähigkeit hat, als Referenzwert zur Bildung des relativen Verhältniswertes der elektrischen Leitfähigkeit herangezogen wird.

3. Schaltungsanordnung nach Anspruch 1, dadurch gekennzeichnet, daß ein Wechselspannungsgenerator (A) jeweils mit einer ersten Elektrode eines im Ionenaustauscherharz-Waschgemisch (5) angeordneten Elektrodenpaars (C) und eines im Nutzwasserabfluß angeordneten Elektrodenpaars (D) verbunden ist, daß jeweils die zweite Elektrode der Elektrodenpaare (C, D) mit den Meßverstärkern (A2, A3) in Verbindung steht, und daß den Ausgängen dieser Meßverstärker ein Differenzverstärker (A4) nachgeschaltet ist und daß der Ausgang des Differenzverstärkers mit einem Eingang eines Komparators (A5) verbunden ist an dessen zweiten Eingang eines Referenzspannung angelegt ist, und dessen Ausgang mit einem Relais (E) verbunden ist.

4. Schaltungsanordnung nach Anspruch 3, dadurch gekennzeichnet, daß die zweite Elektrode der Elektrodenpaare (C, D) mit jeweils einem Verstärker (A2, A3) verbunden ist, und daß das Ausgangssignal der Verstärker (A2, A3) gleichgerichtet und geglättet wird.

5. Schaltungsanordnung nach Anspruch 3, dadurch gekennzeichnet, daß zur Ableitung der Referenzspannung mit den Klemmen der Betriebsspannungsquelle ein Spannungsteiler (R11, R12) verbunden ist.

6. Schaltungsanordnung nach Anspruch 3, dadurch gekennzeichnet, daß als Wechselspannungsgenerator (A) ein Sinusgenerator benutzt wird, daß der Pegel der sinusförmigen Wechselspannung in Anhängigkeit eines Wandlers (Temperatur-Spannungs-Wandlers 17) veränderbar ist und daß die sinusförmige Wechselspannung einem Impedanzwandler (A1) zugeführt wird, dessen Ausgang jeweils mit der ersten Elektrode der Elektrodenpaare (C, D) verbunden ist.

7. Schaltungsanordnung nach Anspruch 6, dadurch gekennzeichnet, daß mit deren Temperatur-Spannungswandler (17) die Ausgangsamplitude des Sinusgenerators umgekehrt proportional zum Temperaturgang des gemessenen Mediums veränderbar ist.

8. Schaltungsanordnung nach Anspruch 4, dadurch gekennzeichnet, daß die Verstärkungsfaktoren der Verstärker (A2, A3) derart eingestellt sind, daß die Differenz der gleichgerichteten Ausgangssignale der Verstärker, die im Differenzverstärker (A4) gebildet wird, von der Leitfähigkeit der flüssigen Phase unbeeinflußt und damit konstant bleibt.

## Claims

1. A method of measuring the degree of loading of an ion exchange filter, the measurement being effected with the aid of measured values from the electrical conductivity or respectively of the electrical resistance, characterised in that the electrical conductivity or respectively the electrical resistance is ascertained as a relative ratio value, in that this ratio value is formed from the instantaneous conductivity and from the conductivity upon saturation concentration of one type of ion and in that these measurements are carried out in such a way that, on the one hand, the measurement of the electrical conductivity is effected in the mixture of the ion exchanger mass with the liquid phase and, on the other hand, a measurement of the electrical conductivity solely is effected in the liquid phase, and these measurements are carried out in a temperature-compensating manner, in that from these two measurements the electrical conductivity of the ion exchanger phase is determined and this determination is effected upon saturation with the type of ion of lower electrical conductivity and this value is stored as reference value, in that by constant measurements during the loading phase of the filter the instantaneous electrical conductivity of the ion exchanger mass is ascertained, and from these instantaneous values and the stored reference value ratio values are constantly formed and these ratio values are formed as signals, which are used both as an indication of the filter state and for triggering the regeneration procedure of the filter.

2.    A method according to claim 1, characterised in that the saturation concentration of the ion exchanger mass which has the lesser conductivity is utilised as reference value for the formation of the relative ratio value of the electrical conductivity.

3.    A circuit arrangement according to claim 1, characterised in that an alternating-current generator (A) is connected respectively to a first electrode of a pair of electrodes (C) arranged in the ion-exchanger resin washing mixture (5) and of a pair of electrodes (D) arranged in the useful water outflow, in that respectively the second electrode of the pairs of electrodes (C,D) communicates with the measuring amplifiers (A2, A3), and in that connected subsequently to the outputs of these measuring amplifiers is a difference amplifier (A4) and in that the output of the difference amplifier is connected to an input of a comparator (A5), to the second input of which a reference voltage is applied, and the output thereof is connected to a relay (E).

4.    A circuit arrangement according to claim 3, characterised in that the second electrode of the pairs of electrodes (G,D) is connected to respectively an amplifier (A2,A3), and in that the output signal of the amplifiers (A2,A3) is rectified and smoothed.

5.    A circuit arrangement according to claim 3, characterised in that for the derivation of the reference voltage a voltage divider (R11,R12) is connected to the terminals of the source of operating voltage.

6.    A circuit arrangement according to claim 3, characterised in that a sine generator (A) is utilised as alternating-voltage generator (A), in that the level of the sinusoidal alternating voltage is variable as a function of a transducer (temperature/voltage transformer 17) and in that the sinusoidal alternating voltage is supplied to an impedance transformer (A1), the output of which is respectively connected to the first electrode of the pairs of electrodes (C,D).

7.    A circuit arrangement according to claim 6, characterised in that with the temperature/voltage transformer (17) thereof the output amplitude of the sine generator is variable conversely proportional to the temperature function of the measured of the measured medium.

8.    A circuit arrangement according to claim 4, characterised in that the amplification factors of the amplifiers (A2,A3) are adjusted in such a way that the difference of the rectified output signals of the amplifiers, which is formed in the difference amplifier (A4), remains unaffected by the conductivity of the liquid phase and thus remains constant.

**Revendications**

1.    Procédé pour mesurer le degré de charge d'un filtre à échange d'ions, la mesure ayant lieu à l'aide de valeurs de mesure à partir de la conductibilité électrique ou de la résistance électrique, respectivement, caractérisé par le fait que l'on détermine la conductibilité électrique ou la résistance électrique, respectivement, sous la forme d'un rapport de valeur relative, par le fait que ce rapport est formé à partir de la conductibilité électrique instantanée et de celle obtenue pour la concentration à saturation en un type d'ions, par le fait que ces mesures sont réalisées de telle manière qu'ont lieu, d'une part, la mesure de la conductibilité électrique dans le mélange de la masse échangeuse d'ions et de la phase liquide, et, d'autre part, une mesure de la conductibilité électrique réalisée seulement dans la phase liquide, cependant que ces mesures sont réalisées avec une compensation de la température, par le fait que l'on détermine à partir de ces deux mesures la conductibilité électrique de la phase échangeuse d'ions et que cette détermination a lieu pour la saturation par le type d'ions dont la conductibilité électrique est la plus faible et que cette valeur est mise en mémoire comme valeur de référence, et par le fait que l'on détermine la conductibilité électrique instantanée de la masse échangeuse d'ions par des mesures continues pendant la phase de charge du filtre, cependant que des rapports sont constamment formés à partir de ces valeurs instantanées et de la valeur de référence mise en mémoire, et que ces rapports sont mis en oeuvre sous la forme de signaux qui sont utilisés, tant comme indicateur de l'état du filtre que pour déclencher le processus de régénération du filtre.

2. Procédé selon la revendication 1, caractérisé par le fait que la concentration à saturation de la masse échangeuse d'ions qui présente la conductibilité électrique la plus faible est utilisée comme valeur de référence pour former le rapport de valeur relative de la conductibilité électrique.

3. Disposition de circuits selon la revendication 1, caractérisé par le fait qu'un générateur de tension alternative (A) est à chaque fois relié à une première électrode d'une paire d'électrodes (C) disposée dans le mélange de lavage de la résine échangeuse d'ions (5) et d'une paire d'électrodes (D) disposée dans la sortie de l'eau d'utilisation, par le fait que la seconde électrode des paires d'électrodes (C, D) est à chaque fois en liaison avec les amplificateurs de mesure (A2, A3), par le fait qu'un amplificateur différentiel (A4) est monté en aval des sorties de ces amplificateurs de mesure, et par le fait que la sortie de l'amplificateur différentiel est reliée à une entrée d'un comparateur (A5) à la seconde entrée duquel est appliquée une tension de référence et dont la sortie est reliée à un relais (E).

4. Disposition de circuits selon la revendication 3, caractérisé par le fait que la seconde électrode des paires d'électrodes (C, D) est à chaque fois reliée à un amplificateur (A2, A3), et par le fait que le signal de sortie des amplificateurs (A2, A3) est redressé et lissé.

5. Disposition de circuits selon la revendication 3, caractérisé par le fait qu'un diviseur de tension (R11, R12) est relié aux bornes de la source de tension de fonctionnement pour prélever la tension de référence.

6. Disposition de circuits selon la revendication 3, caractérisé par le fait que l'on utilise comme générateur de tension alternative (A) un générateur de tensions sinusoïdales, par le fait que le niveau de la tension alternative sinusoïdale peut être modifié en fonction d'un convertisseur (convertisseur température-tension 17), et par le fait que la tension alternative sinusoïdale est amenée à un convertisseur d'impédance (A1) dont la sortie est à chaque fois reliée à la première électrode des paires d'électrodes (C, D).

7. Disposition de circuits selon la revendication 6, caractérisé par le fait qu'au moyen de son convertisseur température-tension (17), l'amplitude de sortie du générateur de tensions sinusoïdales peut être modifiée de manière inversement proportionnelle à l'évolution de la température du milieu mesuré.

8. Disposition de circuits selon la revendication 4, caractérisé par le fait que les facteurs d'amplification des amplificateurs (A2, A3) sont réglés de telle manière que la différence des signaux de sortie redressés des amplificateurs qui est formée dans l'amplificateur différentiel (A4) reste indépendante de la conductibilité de la phase liquide, et donc constante.

Fig.1

Fig.2

Fig.3